# EUROPÄISCHE PATENTSCHRIFT

(11) **EP 3 023 261 B1**
(45) Veröffentlichungstag und Bekanntmachung des Hinweises auf die Patenterteilung: **15.03.2017**
(21) Anmeldenummer: 14003902.5
(22) Anmeldetag: 20.11.2014
(51) Int. Cl.: B44C 5/04, B27N 7/00, B32B 21/02

(54) **Verfahren zum Veredeln einer Holzwerkstoffplatte**
Method for finishing a wooden material panel
Procédé d'affinement d'une plaque en bois

(43) Veröffentlichungstag der Anmeldung: 25.05.2016
(60) Teilanmeldung: 17154864.7
(73) Patentinhaber: Flooring Technologies Ltd., Pieta PTA 9044 (MT)
(72) Erfinder: Lehnhoff, Ingo, 18347 Dierhagen (DE); Oldorff, Frank, 19057 Schwerin (DE)
(74) Vertreter: Rehmann, Thorsten

(56) Entgegenhaltungen:
- EP-A1- 2 743 094
- EP-A1- 2 762 328
- DE-A1-102012 110 075

## Beschreibung

Die Erfindung betrifft ein Verfahren zum Veredeln einer Holzwerkstoffplatte mit einer Oberseite und einer Unterseite, indem zumindest auf die Oberseite oder die Unterseite zunächst eine Schicht aus flüssigem Kunstharz aufgetragen wird, dann wenigstens eine mit einem Kunstharz getränkte Papierlage aufgelegt wird und dieser Aufbau anschließend in einer Presse unter hohem Druck und hoher Temperatur verpresst wird, wobei das Harz aufschmilzt und sich mit der Holzwerkstoffplatte verbindet.

Ein solches Verfahren ist beispielsweise aus der EP 2 743 094 A1 bekannt. Mit dem Kunstharzauftrag auf der Oberseite der Trägerplatte soll erreicht werden, dass ein nur einseitig imprägniertes Dekorpapier verwendet werden kann, weil das auf die Trägerplatte aufgetragene Flüssigharz das vorgetrocknete Imprägniermittel auf der Rückseite des Dekorpapiers anlöst, sodass ein schnelleres Ankleben des Dekorpapiers auf der Trägerplatte erfolgt. Vor dem Auflegen des Dekorpapiers muss die flüssig aufgetragene Kunstharzschicht auf der Oberseite getrocknet werden.

Auf die Oberseite der in der DE 10 2007 012 236 B4 offenbarten Holzwerkstoffplatte wird zunächst eine Trägerschicht aus Papier aufgebracht. Auf diese Trägerschicht wird eine Dekorschicht und anschließend auf die Dekorschicht eine versiegelnde Lackschicht aufgebracht. Die Lackschicht wird dann mittels Elektronenstrahlen vollständig ausgehärtet und in die Lackschicht wird eine Struktur eingeprägt.

Aus einer so veredelten großformatigen Laminatplatte werden anschließend einzelne Paneele ausgeschnitten, die als Fußboden-, Wand- oder Deckenbelag dienen können. Die Paneele können an ihren Seitenkanten mit einer Feder-/Nut-Verbindung versehen werden. Ein Problem bei Laminaten mit einem Papieraufbau ist die Delaminierung, die überall dort anzutreffen ist, wo Materialien Schichtweise unter Zusatz von Bindemittel, Wärme und Druck zusammengefügt werden. Delaminierungen sind vielfach äußerlich als Blasen zu erkennen oder die Papierschicht löst sich bei einem Paneel an den Kanten von der Platte ab.

Um eine Delaminierung auszuschließen, ist man vereinzelt dazu übergegangen, Platten direkt zu beschichten.

Die DE 197 51 115 A1 offenbart ein Verfahren zur Beschichtung eines Paneels, bei dem auf die Oberfläche zumindest eine Farbschicht mittels eines Druckverfahrens, insbesondere mittels Siebdrucks, aufgebracht wird. Die Oberfläche kann dabei unbehandelt, geschliffen oder vorbehandelt, insbesondere lackiert sein. Abschließend kann die aufgebrachte Farbschicht durch eine Beschichtung mit Klarlack abgedeckt werden.

In der DE 10 2004 026 739 A1 wird ein Verfahren beschrieben, bei dem auf die Oberseite der Holzwerkstoffplatte eine Grundierung mittels einer Walze aufgetragen und getrocknet wird. Auf die getrocknete Grundierung wird dann eine erste und zweite Lackschicht aufgetragen, die unter Einwirkung von UV-Licht aushärtet, wobei das Aushärten nicht abgeschlossen wird. Auf die beiden ersten Lackschichten wird abschließend ein UV-härtender Decklack aufgetragen und die oberste Lackschicht anschließend plastisch verformt. Der Direktdruck ist sehr kostenaufwendig und muss sehr sorgfältig ausgeführt werden, um Einschlüsse im Druckaufbau zu vermeiden. Außerdem ist es wichtig, dass jede einzelne Schicht ausreichend getrocknet wird, bevor die nächste Schicht flüssig aufgetragen wird, um das Ineinanderfließen von Farben zu vermeiden.

Bei der Anwendung der Direktdrucktechnologie, also dem unmittelbaren Aufdrucken der einzelnen Schichten auf eine Trägerplatte, zeigt sich im Ergebnis gegenüber herkömmlich gefertigten Paneelen außerdem eine Dickenminderung der fertigen Laminatpaneele durch das Weglassen der Papierlagen. Dies führt zu Problemen bei der Fließfertigung, wenn die großformatigen beschichteten Laminatplatten anschließend zur Herstellung der Paneele aufgeteilt werden. Damit sichergestellt ist, dass einzelne Paneele nicht durch Untermaß der Dicke aus der DIN 13329 herausfallen, muss eine hohe Qualitätssicherung betrieben werden, was einerseits die Fertigung verlangsamt und andererseits die Herstellkosten weiter erhöht. Letztendlich kommt es auch zu einer Irritation beim Händler und/oder Endverbraucher, da die Stapelhöhe direktbeschichteter Platten von mit Papierlagen beschichteten Platten sichtbar abweicht.

Bei der bekannten Plattenfertigung werden üblicherweise HDF-Platten oder MDF-Platten als Trägerplatte eingesetzt, deren Oberseite um etwa 0,3 mm abgeschliffen wird. An der Oberseite und der Unterseite der Trägerplatte ist eine Presshaut ausgebildet, die auch Press-Patina oder Verrottungsschicht genannt wird. Diese Presshaut entsteht beim Verpressen des Faserkuchens und wird durch die heiße Oberfläche der Pressplatten bzw. Bänder der Presse erzeugt. Die Presshaut hat eine Dicke von etwa 0,3 mm. Da die Presshaut vollständig und etwa 0,1 mm vom Kernmaterial zur Verringerung der Rautiefe auf der Oberseite der Platte vor der weiteren Beschichtung abgeschliffen wird, müssen die Platten um eine entsprechende Schleifzugabe dicker gefertigt werden, was die Herstellkosten nachhaltig beeinflusst. Um ein normgerechtes, mittels Direktdrucktechnologie hergestelltes Fußbodenlaminat mit einer Dicke von 6,0 mm herzustellen, muss die Trägerplatte mindestens 0,61 mm aufweisen.

In der EP 2 236 313 ist zum Beispiel beschrieben, dass die Presshaut abgeschliffen werden muss, weil in ihrem Bereich der Wärmeeintrag beim Heißpressen so hoch ist, dass der Klebstoff zu schnell aushärtet, wodurch Leimbrücken wenigstens teilweise brechen und die aufgetragene Schicht anfällig machen. Dieses Brechen der Leimbrücken macht fertige Paneele anfällig gegen Abhebungen der auf der Trägerplatte aufgebrachten Dekor- und abriebfesten Schichten. Diese Delaminierung, die bereits bei normaler Belastung und aus der für Holzwerkstoffe typischen Größenordnung aufgrund von Klimaschwankungen auftreten kann werden vom Kunden nicht toleriert.

Es besteht deshalb ein großer Bedarf an abriebfesten Laminatpaneelen, die sich innerhalb der vorstehend genannten Norm befindlichen Dickentoleranz befinden. Ferner besteht Bedarf an einem resourceschonenden Verfahren zur Herstellung, bei dem Extrakosten aus zusätzlichen Verfahrensschritten und/oder durch zusätzliche Materialien weitgehend vermieden werden.

Von dieser Problemstellung ausgehend soll ein Verfahren zum Veredeln einer Holzwerkstoffplatte, die mit mindestens einer Papierlage beschichtet ist, so verbessert werden, dass eine kräftige Verbindung zwischen der Papierschicht und der Oberseite der Holzwerkstoffplatte hergestellt wird, sodass Delaminierungen sicher vermieden werden.

Die Problemlösung erfolgt bei einem gattungsgemäßen Verfahren dadurch, dass die Oberseite und/oder die Unterseite noch mit einer Presshaut versehen und ungeschliffen bereitgestellt werden und die Schicht so dünn aufgetragen wird, dass das flüssige Kunstharz vollständig in die Presshaut einzieht, keine aktive Trocknung der Schicht erfolgt und die Papierlage auf die Presshaut aufgelegt wird.

Es hat sich völlig überraschend gezeigt, dass dieser Kunstharzauftrag, der an sich aus der Direktdrucktechnologie bekannt ist, dazu führt, dass die Haftung der Papierlage auf der Oberseite und/oder der Unterseite der Holzwerkstoffplatte wesentlich verbessert wird. Da das Papier, das in der Regel ein Dekorpapier ist, mit einem Kunstharz getränkt ist, könnte man annehmen, dass diese bessere Haftung allein deshalb erfolgt, weil mehr Harz bei der Laminierung verwendet wird. Diese Annahme ist aber nicht richtig, weil bekanntermaßen Delaminierungserscheinungen auch dann auftreten, wenn das Dekorpapier mit Harz gesättigt getränkt wird und ein Papier verwendet wird, das sehr saugfähig ist, der Eintrag an Kunstharz in den Laminataufbau also dadurch erhöht wird. Delaminierungen können mit so einem Aufbau nicht sicher verhindert werden.

Die verbesserte Haftung ist wohl darauf zurückzuführen, dass die Oberseite und/oder die Unterseite pressblank, also unbehandelt und mit der vollen Presshaut zur Verfügung gestellt wird. Das flüssig aufgetragene Kunstharz penetriert in diese Presshaut ein und bildet somit zusammen mit der Presshaut eine optimale Grundlage für das später aufgebrachte Dekorpapier.

Das flüssige Kunstharz kann aufgewalzt, aufgestrichen, aufgespachtelt oder aufgesprüht werden.

Durch Entfall der aktiven Trocknung wird der Fertigungsprozess beschleunigt und außerdem eine deutliche Energieeinsparung realisiert.

Vorzugsweise wird das flüssige Kunstharz in einer Menge von 5 bis 100 g/m², insbesondere 5 bis 50 g/m² und weiter insbesondere vorzugsweise 5 bis 25 g/m² aufgetragen.

Das Kunstharz ist vorzugsweise ein Melaminharz oder ein Harnstoffharz oder ein Melamin-Harnstoffharz-Gemisch.

Gute Ergebnisse wurden mit einer Beschichtung realisiert, bei der das Verhältnis von Kunstharz zu Wasser (60:40) mit einer Toleranz von ± 10 % beträgt.

Das Kunstharz kann Additive, insbesondere Härter und/oder Netzmittel und/oder thermoplastische Polymere enthalten.

Die Papierlage wird vorzugsweise vor dem Verpressen mit einer Verschleißschutzschicht aus Kunstharz abgedeckt. Diese Verschleißschutzschicht kann durch ein mit einem Kunstharz getränktes Overlaypapier erzeugt werden. Die Papierlage ist vorzugsweise in Dekorpapier. Die Verschleißschutzschicht kann aber auch flüssig aufgetragen werden. Denkbar ist es auch, für die Verschleißschutzschicht Kunstharzpartikel auf die Papierlage aufzustreuen.

Die nach dem erfindungsgemäßen Verfahren veredelte Holzwerkstoffplatte entspricht einem herkömmlichen Laminat mit Papieraufbau auf der Oberseite, mit dem wesentlichen Unterschied, dass die Haftung zwischen dem Papieraufbau und der Holzwerkstoffplatte durch die zuvor aufgetragene flüssige Kunstharzschicht deutlich verbessert wird. Die Verschleißschutzschicht kann also abriebfeste Partikel, beispielsweise Korund, enthalten, um die Abriebfestigkeit des Laminats zu erhöhen. Während des Verpressens des Laminatsaufbaus kann in die Verschleißschutzschicht eine Struktur eingeprägt werden. Diese Struktur kann korrespondierend zu dem Dekor sein ("Synchronpore"). Das Dekor kann eine Holzmaserung oder ein Fliesenspiegel sein. Im Falle der Holzmaserung entspricht die Struktur dann dem Verlauf der Maserung, den Astlöchern oder Poren in der abgebildeten Holzoberfläche. Im Fall eines Fliesenspiegels entspricht die Struktur den Fugen.

Die gegenüber einem herkömmlichen Laminataufbau mit Papierlagen erzielte Verbesserung ist anhand der Figuren leicht erkennbar. Diese zeigen jeweils ein Rohdichteprofil einer beschichteten MDF-Platte von der Oberseite (0 mm) bis zur Mitte des Holzwerkstoffkerns (3 mm).

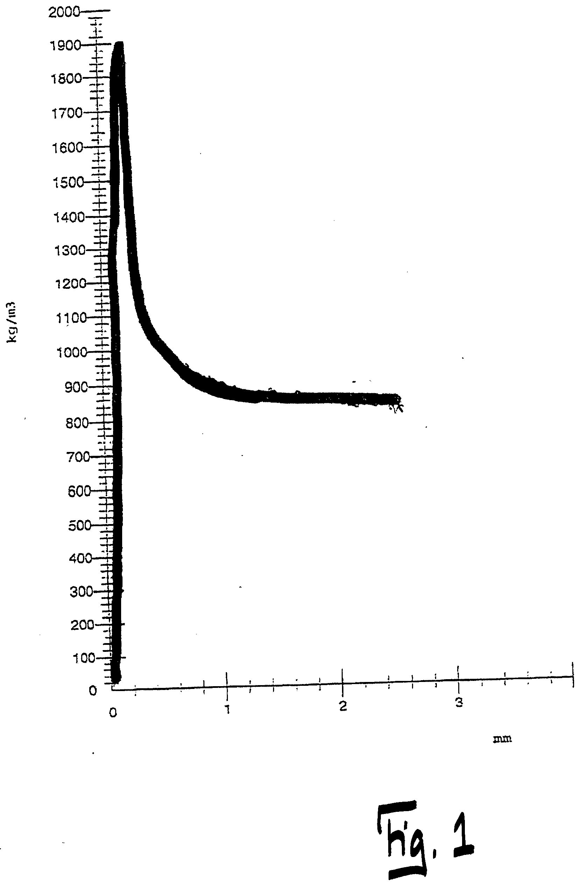

Figur 1 zeigt den Laminataufbau mit einer Standard MDF-Platte, deren Oberseite geschliffen ist, um die Presshaut vollständig abzutragen. Auf die geschliffene Oberseite ist eine mit Kunstharz imprägnierte Dekorpapierlage und darauf eine Overlay-Papierlage aufgelegt und verpresst. Die Abhebefestigkeit der Deckschicht beträgt 2,0 ± 0,1 N/m². Die hohe Rohdichte von 1900 kg/m³ resultiert an der Oberseite durch den Papieraufbau. Zur Mitte des Holzwerkstoffkernes nimmt die Rohdichte kontinuierlich ab.

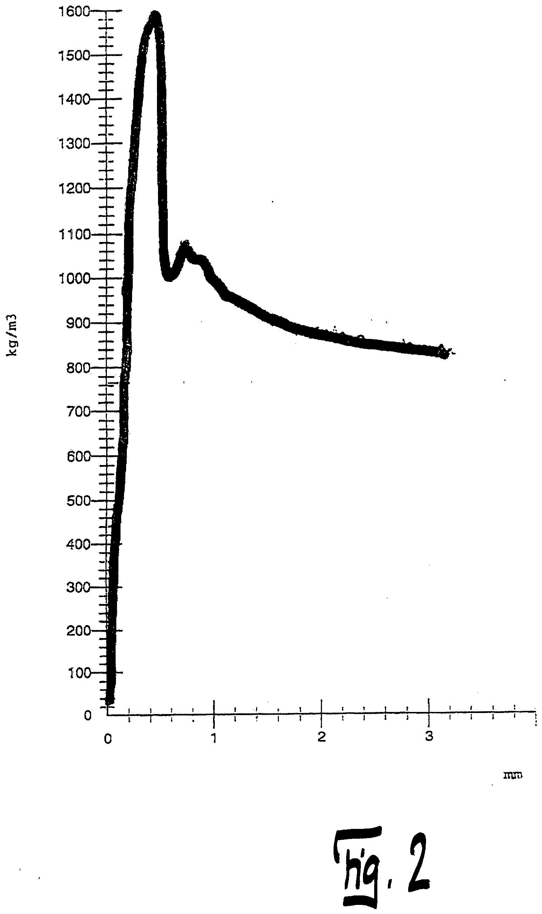

Bei dem in Figur 2 dargestellten Diagramm wurde eine Standard MDF-Platte mit ungeschliffener Oberseite verwendet, also eine MDF-Platte mit vollständiger Presshaut, auf die eine mit Kunstharz imprägnierte Dekor- und Overlaypapierlage aufgelegt und verpresst wurden. Die Abriebfestigkeit der Deckschicht beträgt 1,5 ± 0,3 N/m. Die Rohdichte ist hier in der Spitze niedriger, sie wird aber auch durch die Papierschichten gebildet. Die Rohdichte fällt zunächst kontinuierlich ab, der Anstieg bei etwa 0,25 mm Tiefe resultiert aus der Presshaut, die von der Oberseite nicht entfernt wurde. Hier entsteht die Delaminierungsgefahr, weil die Verbindung zwischen Papieraufbau und Holzwerkstoffplatte schlecht ist.

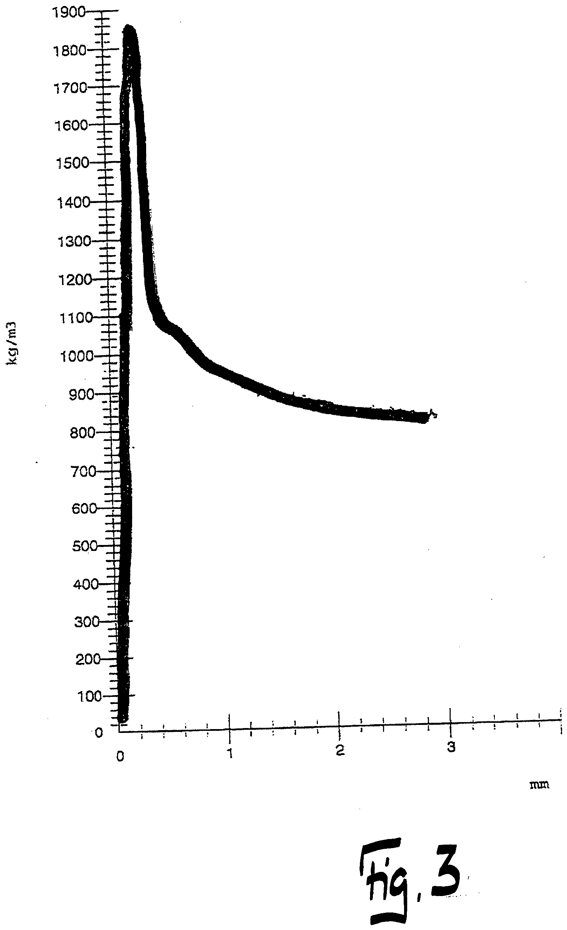

Bei der nach Figur 3 untersuchten Platte handelt es sich um eine erfindungsgemäß behandelte Standard MDF-Platte, die mit pressblanker Oberseite zur Verfügung gestellt und mit 50 g/m² Melaminharz beschichtet wurde, bevor eine kunstharzgetränkte Dekorpapier- und Overlaypapierlage aufgelegt und verpresst wurden. Die Abriebfestigkeit der Deckschicht betrug 1,9 ± 0,1 N/mm². Erkennbar ist, dass die maximale Rohdichte fast den Wert der Standard-Platte (Figur 1) erreicht, diese dann aber kontinuierlich abnimmt und obwohl die Presshaut nicht entfernt wurde, kein Anstieg der Rohdichte mehr zu verzeichnen ist. Wie bei einem Vergleich der Figuren 2 und 3 ersichtlich ist, konnte die Fehlstelle, die zu Delaminierungserscheinungen führen kann, weitgehend vermieden werden, sodass sich ein weitgehender geschlossener Kurvenverlauf einstellt. Die Deckschichtabhebefestigkeit bewegt sich dabei zwar auf dem Niveau des Standardaufbaus nach Figur 1, dabei ist jedoch zu berücksichtigen, dass die Herstellzeit aber allein deutlich dadurch verkürzt wird, dass das Abschleifen der Presshaut entfällt, eine Kosteneinsparung dadurch erzielt wird, und dass der abzuschleifende Bereich der Oberseite nicht durch Eintrag von mehr Material beim Herstellen der MDF-Platte vorab ausgeglichen werden muss. Erkennbar ist, dass erfindungsgemäß eine Delaminierung sicher vermieden wird und unter Umständen auch die Beharzung der imprägnierten Papierlagen reduziert werden kann, weil möglichicherweise durch den Kunstharzeintrag in die Presshaut das für die Verbindung notwendige Kunstharz vorab geliefert wird. Die Unterseite kann genauso wie die Oberseite der Holzwerkstoffplatte veredelt werden. Auch können die Oberseite und die Unterseite identisch behandelt werden. Vorzugsweise erfolgt die Veredelung beider Seiten dann gleichzeitig.

## Patentansprüche

1. Verfahren zum Veredeln einer Holzwerkstoffplatte mit einer Oberseite und einer Unterseite, indem zumindest auf die Oberseite oder die Unterseite zunächst eine Schicht aus flüssigem Kunstharz aufgetragen wird, dann wenigstens eine ein Kunstharz aufweisende Papierlage aufgebracht wird und dieser Aufbau anschließend in einer Presse unter hohem Druck und hoher Temperatur verpresst wird, wobei das Kunstharz aufschmilzt und sich mit der Oberseite oder der Unterseite der Holzwerkstoffplatte verbindet, die Oberseite und/oder die Unterseite noch mit einer Presshaut versehen und ungeschliffen bereitgestellt werden und die Schicht so dünn aufgetragen wird, dass das flüssige Kunstharz vollständig in die Presshaut einzieht, keine aktive Trocknung der Schicht erfolgt und die mit Kunstharz getränkte Papierlage auf die Presshaut aufgelegt wird.

2. Verfahren nach Anspruch 1, **dadurch gekennzeichnet, dass** sowohl die Oberseite als auch die Unterseite gleich veredelt wird.

3. Verfahren nach Anspruch 1 oder 2, **dadurch gekennzeichnet, dass** das flüssige Kunstharz aufgewalzt, aufgestrichen, aufgespachtelt oder aufgesprüht wird.

4. Verfahren nach Anspruch 1, **dadurch gekennzeichnet, dass** das Kunstharz in einer Menge von 5 bis 100 g/m² aufgetragen wird.

5. Verfahren nach Anspruch 4, **dadurch gekennzeichnet, dass** das Kunstharz in einer Menge von 5 bis 50 g/m² aufgetragen wird.

6. Verfahren nach Anspruch 5, **dadurch gekennzeichnet, dass** das Kunstharz in einer Menge von 5 bis 25 g/m² aufgetragen wird.

7. Verfahren nach einem der vorstehenden Ansprüche, **dadurch gekennzeichnet, dass** das Kunstharz ein Melaminharz oder ein Harnstoffharz oder ein Melamin-Harnstoffharz-Gemisch ist.

8. Verfahren nach einem der vorstehenden Ansprüche, **dadurch gekennzeichnet, dass** das Verhältnis von Kunstharz zu Wasser 60:40 mit einer Toleranz von + 10 % beträgt.

9. Verfahren nach einem der vorstehenden Ansprüche, **dadurch gekennzeichnet, dass** das Kunstharz Additive enthält.

10. Verfahren nach Anspruch 9, **dadurch gekennzeichnet, dass** das Kunstharz Härter und/oder Netzmittel und/oder thermoplastische Polymere enthält.

11. Verfahren nach einem der vorstehenden Ansprüche, **dadurch gekennzeichnet, dass** die mindestens eine Papierlage ein Dekorpapier ist.

12. Verfahren nach einem der vorstehenden Ansprüche, **dadurch gekennzeichnet, dass** die Papierlage vor dem Verpressen mit einer Verschleißschutzschicht aus Kunstharz abgedeckt wird.

13. Verfahren nach Anspruch 12, **dadurch gekennzeichnet, dass** auf die Papierlage ein Overlay-Papier aufgelegt wird.

## Claims

1. Process for the finishing of a wooden composite board with an upper side and an underside, in that firstly a layer of liquid synthetic resin is applied at least to the upper side or the underside, then at least one paper ply comprising a synthetic resin is applied, and this structure is then pressed in a press under high pressure and at high temperature, where the synthetic resin melts and bonds to the upper side or the underside of the wooden composite board, **characterized in that** the upper side and/or the underside retain a press skin and are provided without surface-grinding, and the layer applied is so thin that all of the liquid synthetic resin enters the press skin, no active drying of the layer takes place, and the synthetic-resin-impregnated paper ply is placed onto the press skin.

2. Process according to Claim 1, **characterized in that** the finishing process is carried out identically on both the upper side and the underside.

3. Process according to Claim 1 or 2, **characterized in that** the liquid synthetic resin is applied by rolling, spreading, trowelling or spraying.

4. Process according to Claim 1, **characterized in that** the quantity applied of the synthetic resin is from 5 to 100 g/m².

5. Process according to Claim 4, **characterized in that** the quantity applied of the synthetic resin is from 5 to 50 g/m².

6. Process according to Claim 5, **characterized in that** the quantity applied of the synthetic resin is from 5 to 25 g/m².

7. Process according to any of the preceding claims, **characterized in that** the synthetic resin is a melamine resin or a urea resin or a melamine-urea-resin mixture.

8. Process according to any of the preceding claims, **characterized in that** the ratio of synthetic resin to water is 60:40 with a tolerance of +10%.

9. Process according to any of the preceding claims, **characterized in that** the synthetic resin comprises additives.

10. Process according to Claim 9, **characterized in that** the synthetic resin comprises hardeners and/or wetting agents and/or thermoplastic polymers.

11. Process according to any of the preceding claims, **characterized in that** the at least one paper ply is a decorative paper.

12. Process according to any of the preceding claims, **characterized in that**, before the pressing procedure, the paper ply is covered with a wear layer made of synthetic resin.

13. Process according to Claim 12, **characterized in that** an overlay paper is placed onto the paper ply.

## Revendications

1. Procédé d'affinement d'une plaque en matériau à base de bois comportant une face supérieure et une face inférieure, dans lequel on applique au moins sur la face supérieure ou sur la face inférieure tout d'abord une couche en résine synthétique liquide, ensuite on applique au moins une couche de papier présentant une résine synthétique, puis cette structure est pressée dans une presse sous une pression élevée et à une température élevée, dans lequel la résine synthétique fond et se relie avec la face supérieure ou avec la face inférieure de la plaque en matériau à base de bois, **caractérisé en ce que** l'on pourvoit la face supérieure et/ou la face inférieure encore d'une peau de pressage et on la/les prépare sans ponçage, et on applique la couche de façon si mince que la résine synthétique liquide est absorbée complètement dans la peau de pressage, qu'il n'y a pas de séchage actif de la couche et on pose la couche de papier imprégnée de la résine synthétique sur la peau de pressage.

2. Procédé selon la revendication 1, **caractérisé en ce que** l'on affine de la même façon aussi bien la face supérieure que la face inférieure.

3. Procédé selon la revendication 1 ou 2, **caractérisé en ce que** l'on applique la résine synthétique liquide par laminage, par étalement, à la spatule ou par pulvérisation.

4. Procédé selon la revendication 1, **caractérisé en ce que** l'on applique la résine synthétique en une quantité de 5 à 100 g/m².

5. Procédé selon la revendication 4, **caractérisé en ce que** l'on applique la résine synthétique en une quantité de 5 à 50 g/m².

6. Procédé selon la revendication 5, **caractérisé en ce que** l'on applique la résine synthétique en une quantité de 5 à 25 g/m².

7. Procédé selon l'une des revendications précédentes, **caractérisé en ce que** la résine synthétique est une résine mélaminée ou une résine urée ou un mélange de résine mélaminée urée.

8. Procédé selon l'une des revendications précédentes, **caractérisé en ce que** le rapport de la résine synthétique sur l'eau est de 60:40 avec une tolérance de + 10 %.

9. Procédé selon l'une des revendications précédentes, **caractérisé en ce que** la résine synthétique contient des additifs.

10. Procédé selon la revendication 9, **caractérisé en ce que** la résine synthétique contient un agent durcisseur et/ou un agent réticulant et/ou des polymères thermoplastiques.

11. Procédé selon l'une des revendications précédentes, **caractérisé en ce que** ladite au moins une couche de papier est un papier décor.

12. Procédé selon l'une des revendications précédentes, **caractérisé en ce qu'**avant le pressage, on recouvre la couche de papier par une couche de protection anti-usure en résine synthétique.

13. Procédé selon la revendication 12, **caractérisé en ce que** l'on pose un papier de recouvrement ("overlay") sur la couche de papier.
